# EUROPÄISCHE PATENTSCHRIFT

(11) **EP 0 666 449 B1**
(45) Veröffentlichungstag und Bekanntmachung des Hinweises auf die Patenterteilung: **26.08.1998**
(21) Anmeldenummer: 95100325.0
(22) Anmeldetag: 12.01.1995
(51) Int. Cl.: F16N 3/12

(54) **Handpresse**
Grease gun
Pistolet graisseur

(30) Priorität: 28.01.1994 DE 9401318 U
(43) Veröffentlichungstag der Anmeldung: 09.08.1995
(73) Patentinhaber: FUCHS LUBRITECH GMBH, 67685 Weilerbach (DE)
(72) Erfinder: Schumann, Axel, c/o Keil & Schaafhausen, D-60322 Frankfurt am Main (DE)
(74) Vertreter: KEIL & SCHAAFHAUSEN Patentanwälte

(56) Entgegenhaltungen:
- GB-A- 533 441
- US-A- 1 945 651
- US-A- 1 968 231
- US-A- 2 612 296
- US-A- 2 873 893

## Beschreibung

Die Erfindung betrifft eine Handpresse, insbesondere Handhebelpresse, für viskose Massen, insbesondere Schmierfett, mit einem Pressenkopf enthaltend eine Kolbenpumpe für die Förderung der viskosen Masse von einer Ansaugöffnung zu einer Auslaßöffnung sowie mit zwei Handhebeln, von welchen wenigstens einer zur Betätigung der Kolbenpumpe an dem Pressenkopf gelenkig gelagert ist, bei welcher an die Ansaugöffnung ein Vorrat an viskoser Masse, z.B. in Form eines als Tube oder Kartusche ausgebildeten Vorratsbehälters, und an die Auslaßöffnung ein wenigstens bereichsweise biegsamer rohr- oder schlauchförmiger Abgabeadapter anschließbar sind.

Eine derartige Handpresse ist bspw. aus der DE-U 8 709 845 bekannt. Die Handpresse wird mit zwei Händen bedient, wobei ein Handhebel relativ zu einem Pressenkopf feststeht, während der andere gelenkig an dem Pressenkopf gelagert ist. Mittels der Hebel wird eine in dem Pressenkopf integrierte Hochdruckkolbenpumpe betätigt und ein Druck von ungefähr 400 hPa erzeugt. Dabei wird das Schmierfett mittels des Unterdrucks aus einem auswechselbar an dem Pressenkopf gehaltenen Vorratsbehälter herausgesaugt und mittels eines Kolbens in den Abgabeadapter, welcher zur Versorgung mit Schmierstoff bspw. auf einen Schmiernippel aufgesetzt werden kann, gepreßt. Der auswechselbare Vorratsbehälter ist hierbei zwischen den Handhebeln angeordnet und mittels eines Außengewindes in ein dazu passendes selbsthemmendes Innengewinde des Pressenkopfes eingeschraubt.

Derartige Handpressen sind auch für die einhändige Bedienung bekannt. Hierbei ist der Vorratsbehälter außerhalb der Handhebel angeordnet, um die Schließbewegung der Handhebel relativ zueinander mit einer Hand nicht zu behindern.

Die bekannten Handpressen sind aufgrund des Adapters wenig kompakt und unbequem zu transportieren.

Der Erfindung liegt die Aufgabe zugrunde, eine Handpresse der eingangs beschriebenen Art in ihrer Funktion und Handhabung zu verbessern.

Diese Aufgabe wird erfindungsgemäß z.B. im wesentlichen dadurch gelöst, daß an dem Pressenkopf oder einem mit diesem verbundenen Pressenteil eine Halteeinrichtung zur Aufnahme, insbesondere zum Auf- bzw. Einstecken, des freien Endes des zu einer Schlaufe gekrümmten Abgabeadapters vorgesehen ist. So wird die Handpresse bei Nicht-Benutzung kompakter für Transport und Lagerung.

In Weiterbildung dieses Erfindungsgedankens ist vorgesehen, daß der Abgabeadapter zugbelastbar, aber lösbar auf bzw. in die Halteeinrichtung steckbar ist. Hierdurch bildet der Abgabeadapter eine Trage- bzw. Halteschlaufe, mit Hilfe welcher die Handpresse bequem getragen und leicht aufgehängt werden kann.

Gemäß einer besonders vorteilhaften Ausgestaltung der Erfindung ist das freie Ende des Abgabeadapters dichtend auf bzw. in die Halteeinrichtung steckbar, so daß der Austritt von viskoser Masse verhindert ist.

Gemäß einer weiteren besonders vorteilhaften Ausgestaltung der Erfindung weist die Halteeinrichtung einen Schmiernippel auf, welcher als Normteil kostengünstig und einfach zu montieren ist sowie einen sicheren Halt für das aufgesteckte freie Ende des biegsamen Abgabeadapters bietet.

Gemäß einer noch weiteren Ausgestaltung der Erfindung ist die Halteeinrichtung auf der Stirnseite des Pressenkopfes angebracht, wodurch, während die Handpresse mit der einen Hand an einem der Handhebel gehalten wird, mit der anderen Hand das freie Ende des Abgabeadapters bequem von der Halteeinrichtung abgezogen bzw. auf oder in diese gesteckt werden kann.

Gemäß einer noch weiteren Ausgestaltung der Erfindung ist eine Handpresse mit wenigstens einem mit dem Pressenkopf fest verbundenen Handhebel und mit einem einen Schaft aufweisenden Vorratsbehälter für die viskose Masse durch eine den Schaft des Vorratsbehälters wenigstens bereichsweise umgreifenden, an dem feststehenden Handhebel bzw. an dem Pressenkopf angebrachten Halterung gekennzeichnet, mit Hilfe welcher der Vorratsbehälter sicherer relativ zu dem Pressenkopf festlegbar ist.

In Weiterbildung dieses Erfindungsgedankens ist vorgesehen, daß die Halterung eine in oder senkrecht zu der Ebene der Handhebel verschwenkbare Lasche und einen an dem freien Ende der Lasche um eine in Verlängerung oder senkrecht zu der Lasche gedachten Ringdurchmesser verdrehbaren Haltering aufweist, wodurch die Handpresse ohne Vorratsbehälter noch platzsparender gelagert bzw. bequemer transportiert werden kann und sich bspw. bei Einschrauben des Vorratsbehälters in den Pressenkopf die Halterung selbsttätig in Bezug auf die Aufnahme des Vorratsbehälters in dem Pressenkopf ausrichten kann.

Die Halterung für den Vorratsbehälter ist vorzugsweise platzsparend und bei günstiger Gewichtsverteilung zwischen den beiden Handhebeln angeordnet.

Mit der Erfindung wird auch vorgeschlagen, daß dem Pressenkopf auf der dem Vorratsbehälter zugewandten Seite wenigstens eine Verstärkungsrippe zuzuordnen ist, wodurch sich die Anlagefläche des Vorratsbehälters am Pressenkopf vergrößert, dem Vorratsbehälter eine stabilere Lagerung am Pressenkopf sowie dem Pressenkopf und der Befestigung des einen Handhebels eine größere Stabilität gegeben wird.

In Weiterbildung dieses Erfindungsgedankens ist bei einer Handpresse mit einem feststehenden Handhebel und einem an den Pressenkopf angelenkten Handhebel zur Betätigung der Kolbenpumpe vorgesehen, daß die Verstärkungsrippe dem feststehenden Handhebel zugeordnet ist. Hierdurch ergibt sich für den feststehenden Handhebel eine steifere Befestigung an dem Pressenkopf, indem es möglich wird, den Abstand zwischen zwei Befestigungspunkten zu vergrößern.

Um die Befestigungspunkte für die Handhebel in einem noch weiteren Abstand zueinander anordnen zu können und gleichzeitig die mögliche Einschraubtiefe des Vorratsbehälters, wenn dieser mittels eines Gewindes am Pressenkopf befestigt wird, zu verlängern, wird vorgeschlagen, daß die Verstärkungsrippe an der Außenseite eines Bundes zur Aufnahme des Vorratsbehälers angeschlossen ist und mit der Oberkante des Bundes im wesentlichen bündig abschließt.

Nachfolgend werden Ausführungsbeispiele der Erfindung anhand der Zeichnung näher erläutert.

Es zeigen:
- Fig. 1: eine erfindungsgemäße Handpresse (Zweihandpresse) mit Vorratsbehälter und Abgabeadaptern, dessen freies Ende auf bzw. in eine Halteeinrichtung gesteckt ist, und
- Fig. 2: eine erfindungsemäße Handpresse (Einhandpresse) ohne Vorratsbehälter und mit Abgabeadapter, dessen freies Ende zur Abgabe der viskosen Masse von der Halteinrichtung abgezogen ist.

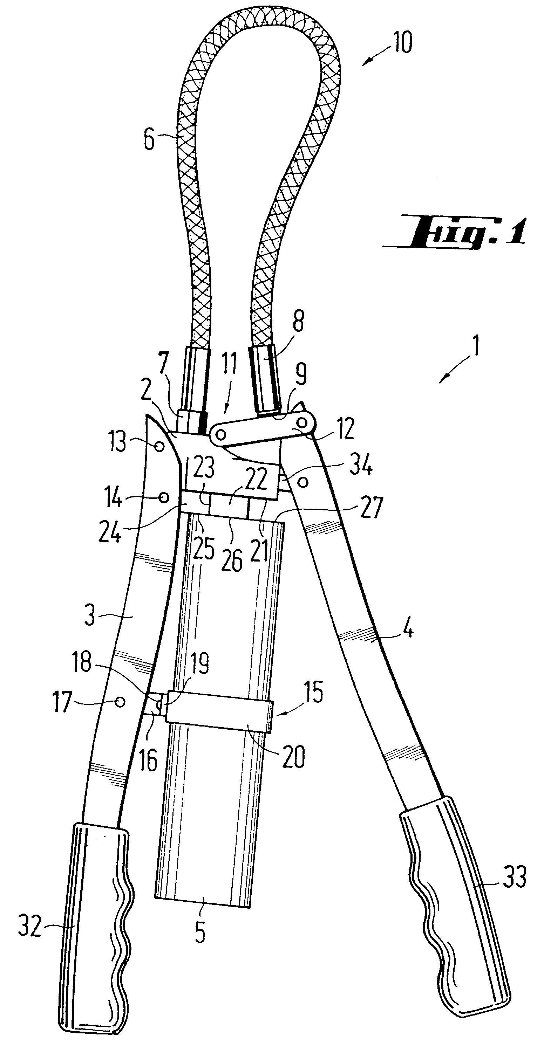

Die in Fig. 1 dargestellte Zweihandpresse 1 für viskose Massen, wie Schmierfett weist einen Pressenkopf 2 auf, an welchem ein Handhebel 3 über zwei Befestigungspunkte 13, 14 starr und ein beweglicher über ein Lagerglied 12 und auf ein Kolbenbetätigungsglied 34 einwirkender Handhebel 4 schwenkbar befestigt ist. Zwischen den mit Griffen 32, 33 ausgestatteten Handhebeln 3, 4 ist an einem Bund 22 des Pressenkopfes 2 ein Vorratsbehälter 5 auswechselbar angeordnet und so an die Saugseite einer in dem Pressenkopf 2 integrierte (nicht dargestellte) Kolbenpumpe angeschlossen. Die Druckseite der Kolbenpumpe mündet in eine Adapteraufnahme 7, in welche ein biegsamer Abgabeadapter 6 eingeschraubt ist.

Das freie Ende 8 des Abgabeadapters 6 ist auf eine Halteeinrichtung 9 aufgesteckt. Dabei bildet der Abgabeadapter 6 eine Halte- oder Trageschlaufe 10. Die Halteeinrichtung 9 ist an der Stirnseite 11 der Zweihandpresse 1 vorgesehen, an welcher sich auch die Adapteraufnahme 7 befindet.

Etwa in der Mitte der Länge des feststehenden Handhebels 3 ist an diesem eine Halterung 15 schwenkbar gelagert. Die Halterung 15 weist eine mittels einer Nietverbindung 17 an dem feststehenden Handhebel 3 in der Ebene der Handhebel 3, 4 schwenkbare Lasche 16 auf. An einem abgewinkelten Ende 19 der Lasche 16 ist mittels einer weiteren Nietverbindung 18 ein Haltering 20 um einen in Verlängerung der Lasche 16 gedachten Ringdurchmesser verdrehbar angebracht. Der Haltering 20 umgreift den austauschbaren Vorratsbehälter 5 zur Sicherung ringförmig.

Wenn der Vorratsbehälter 5 an den an der zwischen den Handhebeln 3, 4 liegenden Fläche 21 vorgesehenen Bund 22 angesetzt ist, stützt sich der Vorratsbehälter 5 stirnseitig auch an einer auf der Außenseite des Bundes 22 in Richtung des feststehenden Handhebels 3 führenden Verstärkungsrippe 24 ab. Dabei schließt die Außenkante 25 der Verstärkungsrippe 24 bündig mit der Außenkante 26 des Bundes 22 ab und bildet dadurch eine gemeinsame Anlagefläche für die Stirnwandung 27 des auswechselbaren kartuschenförmigen Vorratsbehälters 5.

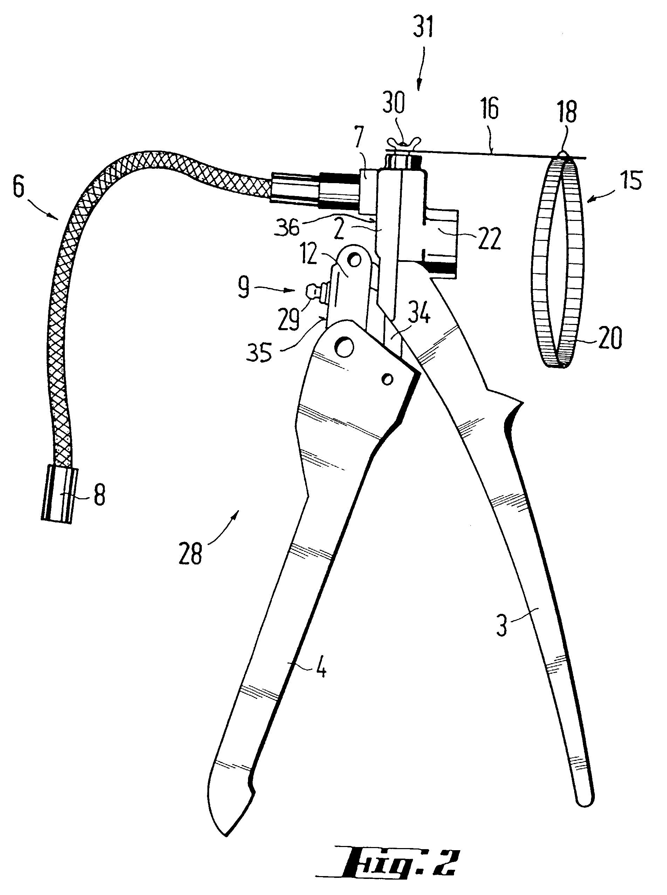

Die in Fig. 2 dargestellte Einhandpresse 28 weist einen an dem Pressenkopf 2 feststehenden Handhebel 3 auf. Dem feststehehden Handhebel 3 ist ein schwenkbar beweglicher Handhebel 4, welcher über ein Lagerglied 12 an dem Pressenkopf 2 angebracht ist und auf ein Kolbenbetätigungsglied 34 einwirkt, zugeordnet. An der Außenseite 35 des Lagergliedes 12 ist als Halteeinrichtung 9 für das freie Ende 8 des biegsamen Abgabeadapters 6 ein Schmiernippel 29 befestigt. Die Außenseite 35 des Lagergliedes 12 weist in die gleiche Richtung wie die Seitenfläche 36 des Pressenkopfes 2, an welcher die Adapteraufnahme 7 sitzt.

Die Halterung 15 weist auch hier eine Lasche 16 und einen Haltering 20 für die Aufnahme des Vorratsbehälters 5 auf. Die Lasche 16 ist lösbar und seitlich verstellbar mittels einer Flügelmutter 30 auf der Stirnseite 31 des Pressenkopfes 2 befestigt. An ihrem freien Ende hält die Lasche 16 drehbar über eine Nietverbindung 18 den Haltering 20, welcher dadurch leicht in die Ebene der Handhebel 3, 4 gedreht werden kann. Auch hier kann dem Bund 22 eine (nicht dargestellte) radiale Verstärkungsripppe zugeordnet sein.

Die in Fig. 1 dargestellte Zweihandpresse 1 wird wie folgt gehandhabt:

Zunächst wird ein neuer gefüllter auswechselbarer Vorratsbehälter 5 durch den Haltering 20 gesteckt und in den Bund 22 so weit eingeschraubt, bis sich die Stirnwand 27 an der Außenkante 25 der Verstärkungsripppe 24 und an der Außenkante 26 des Bundes 22 abstützt. Dazu wird vorher der Haltering 20 aus der Aufbewahrungsstellung in der Ebene der Handhebel 3, 4 in die in Fig. 1 dargestellte Lage um die mittels der Nietverbindung 18 gebildete Drehachse gedreht. Außerdem kann der Haltering 20 mittels der Lasche 16 um die Achse der Nietverbindung 17 in Ausrichtung zu dem Vorratsbehälter 5 geschwenkt und positioniert werden.

In die Adapteraufnahme 7 wird ein Abgabeadapter 6 eingeschraubt, dessen freies Ende 8 bei Benutzung der Handpresse auf einen nicht dargestellten Schmiernippel einer ebenfalls nicht dargestellten zu schmierenden Vorrichtung aufgesteckt werden kann.

Während die eine Hand des Benutzers den Griff 32 des feststehenden Handhebels 3 hält, zieht die andere Hand am Griff 33 den beweglichen Handhebel 4 auf den Handhebel 3 zu, wodurch auf das Kolbenbetätigungsglied 34 der Kolbenpumpe eingewirkt wird, um dabei viskose Masse, wie Schmierfett aus dem Vorratsbehälter 5 zu saugen. Durch eine entsprechende Gegenbewegung des Handhebels 4, bei welcher sich das Kolbenbetätigungsglied 34 in entgegengesetzte Richtung bewegt, wird der angesaugte Schmierstoff unter hohem Druck durch die Adapteraufnahme 7 und den schlauchförmigen Abgabeadapter 6 in die zu schmierende Vorrichtung gedrückt. Die hierbei auftretenden Kräfte werden zuverlässig über die Befestigungspunkte 13, 14 von dem Pressenkopf 2 aufgenommen, wobei die Verstärkungsrippe 24 für erhöhte Stabilität sorgt.

Für den Transport und die Lagerung der Handpresse wird das freie Ende 8 des Abgabeadapters 6 auf die Halteeinrichtung 9 aufgesteckt. Dabei wird die Öffnung des freien Endes 8 von der Halteeinrichtung 9 verschlossen. Da diese Verbindung auf Zug belastbar ist, kann der Abgabeadapter 6 während des Transports oder der Lagerung als Trage- oder Halteschlaufe 10 dienen, bspw. zum Aufhängen an einem Haken.

Für die platzsparende Lagerung der Zweihandpresse 1 wird nach Abnahme des Vorratsbehälters 5 die Halterung 20 in die Ebene, welche durch die Handhebel 3, 4 bestimmt ist, verdreht. Mit oder ohne auf die Halteeinrichtung aufgesetztem Abgabeadapter 6 bildet die Zweihandpresse 1 ein kompaktes flaches Gebilde.

Die in Fig. 2 dargestellte Einhandpresse 28 wird wie folgt gehandhabt:

Zum Auspressen des Schmierstoffes durch den Abgabeadapter 6 wird mittels einer Hand des Benutzers der bewegliche Handhebel 4 an den feststehenden Handhebel 3 herangezogen. Dadurch wird das Kolbenbetätigungselement 34 der Kolbenpumpe in dem Pressenkopf 2 betätigt. Außerdem wird hierbei eine Druckfeder vorgespannt, welche sich zum Ansaugen des Schmierstoffes aus dem nicht dargestellten Vorratsbehälter entspannt und hierbei den beweglichen Handhebel 4 in seine dargestellte Ausgangslage zurückbewegt. Bei Nicht-Benutzung kann auch hier der Haltering 20 in die Ebene der Handhebel 3, 4 verdreht und das freie Ende 8 des Abgabeadapters 6 auf die Halteeinrichtung 9 gesteckt werden.

### Bezugszeichenliste:

- 1: Zweihandpresse
- 2: Pressenkopf
- 3: feststehender Handhebel
- 4: beweglicher Handhebel
- 5: Vorratsbehälter
- 6: Abgabeadapter
- 7: Adapteraufnahme
- 8: Ende
- 9: Halteeinrichtung
- 10: Halte- oder Trageschlaufe
- 11: Stirnseite
- 12: Lagerglied
- 13: Befestigungspunkt
- 14: Befestigungspunkt
- 15: Halterung
- 16: Lasche
- 17: Nietverbindung
- 18: Nietverbindung
- 19: abgewinkeltes Ende
- 20: Haltering
- 21: Fläche
- 22: Bund
- 23: Außenseite
- 24: Verstärkungsrippe
- 25: Außenkante
- 26: Außenkante
- 27: Stirnwandung
- 28: Einhandpresse
- 29: Schmiernippel
- 30: Flügelmutter
- 31: Stirnseite
- 32: Griff
- 33: Griff
- 34: Kolbenbetätigungsglied
- 35: Außenseite
- 36: Seitenfläche

## Patentansprüche

1. Handpresse, insbesondere Handhebelpresse, für viskose Massen, insbesondere Schmierfett, mit einem Pressenkopf (2) enthaltend eine Kolbenpumpe für die Förderung der viskosen Masse von einer Ansaugöffnung zu einer Auslaßöffnung sowie mit zwei Handhebeln (3, 4), von welchen wenigstens einer zur Betätigung der Kolbenpumpe an dem Pressenkopf (2) gelenkig gelagert ist, bei welcher an die Ansaugöffnung ein Vorrat an viskoser Masse, z.B. in Form eines als Tube oder Kartusche ausgebildeten Vorratsbehälters (5), und an die Auslaßöffnung ein wenigstens bereichsweise biegsamer rohr- oder schlauchförmiger Abgabeadapter (6) anschließbar sind, **dadurch gekennzeichnet**, daß an dem Pressenkopf (2) oder einem mit diesem verbundenen Pressenteil eine Halteeinrichtung (9) zur Aufnahme, insbesondere zum Aufstecken bzw. Einstecken, des freien Endes (8) des zu einer Schlaufe (10) gekrümmten Abgabeadapters (6) vorgesehen ist.

2. Handpresse nach Anspruch 1, **dadurch gekennzeichnet**, daß der Abgabeadapter (6) zugbelastbar aber lösbar auf bzw. in die Halteeinrichtung (9) steckbar ist.

3. Handpresse nach Anspruch 1 oder 2, **dadurch gekennzeichnet**, daß das freie Ende (8) des Abgabeadapters (6) dichtend auf bzw. in die Halteeinrichtung (9) steckbar ist.

4. Handpresse nach einem der Ansprüche 1 bis 3, **dadurch gekennzeichnet**, daß die Halteeinrichtung (9) einen Schmiernippel (29) aufweist.

5. Handpresse nach einem der Ansprüche 1 bis 4, **dadurch gekennzeichnet**, daß die Halteeinrichtung (9) auf der Stirnseite (11) des Pressenkopfes (2) vorgesehen ist.

6. Handpresse nach einem der Ansprüche 1 bis 5, mit wenigstens einem mit dem Pressenkopf (2) fest verbundenen Handhebel (3) und mit einem einen Schaft aufweisenden Vorratsbehälter (5) für die viskose Masse, **gekennzeichnet durch** eine den Schaft des Vorratsbehälters (5) wenigstens bereichsweise umgreifenden, an dem feststehenden Handhebel (3) bzw. an dem Pressenkopf (2) angebrachten Halterung (15).

7. Handpresse nach Anspruch 6, **dadurch gekennzeichnet**, daß die Halterung (15) eine in oder senkrecht zu der Ebene der Handhebel (3, 4) verschwenkbare Lasche (16) und eine an dem freien Ende der Lasche (16) um einen in Verlängerung oder senkrecht zu der Lasche (16) gedachten Ringdurchmesser verdrehbauen Haltering (20) aufweist.

8. Handpresse nach Anspruch 6 oder 7, **dadurch gekennzeichnet**, daß die Halterung (15) zwischen den beiden Handhebeln (3, 4) angeordnet ist.

9. Handpresse nach einem der Ansprüche 1 bis 8, **dadurch gekennzeichnet**, daß dem Pressenkopf (2) auf der dem Vorratsbehälter (5) zugewandten Seite wenigstens eine Verstärkungsrippe (24) zugeordnet ist.

10. Handpresse nach Anspruch 9 bestehend aus einem feststehenden Handhebel (3) und einem an dem Pressenkopf (2) angelenken Handhebel (4) zur Betätigung der Kolbenpumpe, **dadurch gekennzeichnet**, daß die Verstärkungsrippe (24) dem feststehenden Handhebel (3) zugeordnet ist.

11. Handpresse nach Anspruch 9 oder 10, **dadurch gekennzeichnet**, daß sich die Verstärkungsrippe (24) an der Außenseite (23) eines Bundes (22) zur Aufnahme des Vorratsbehälters (5) anschließt und vorzugsweise bis zum feststehenden Handhebel (3) reicht, und daß die Außenkante (25) der Verstärkungsrippe (24) mit der Außenkante (26) des ringförmigen Bundes (22) bündig abschließt.

## Claims

1. Manual press, in particular a manual lever press for viscous matter, in particular lubricant grease, with a press head (2) containing a piston pump for the conveyance of the viscous matter from an inlet opening to an outlet opening and with two manual levers (3, 4) of which at least one is hinge-mounted on the press head (2) to operate the piston pump, where at the inlet opening can be connected a store of viscous matter eg. in the form of a storage container (5) structured as a tube or cartridge and at the outlet opening can be connected at least one pipe-or hose-shaped output adaptor (6) flexible at least in parts, characterised in that on the press head (2) or on a pressed part connected with this is arranged a holder device (9) to hold the free end (8) of the output adaptor (6) curved into a loop (10), in particular by the said free end being pushed on or in the said holder device.

2. Manual press according to claim 1, characterised in that the output adaptor (6) can be pushed on or in the holder device (9) where it can withstand tension but can be released.

3. Manual press according to claim 1 or 2, characterised in that the free end (8) of the output adaptor (6) can be pushed tightly on or in the holder device (9).

4. Manual press according to any of claims 1 to 3, characterised in that the holder device (9) has a lubricating nipple (29).

5. Manual press according to any of claims 1 to 4, characterised in that the holder device (9) is provided on the front (11) of the press head (2).

6. Manual press according to any of claims 1 to 5, with at least one manual lever (3) firmly connected to the press head (2) and with a storage container (5) for the viscous matter fitted with a shaft, characterised by a mounting device (15) fitted on the fixed manual lever (3) or on the press head (2) and at least partly surrounding the shaft of the storage container (5).

7. Manual press according to claim 6, characterised in that the mounting device (15) has a tab (16) which can be swivelled in or perpendicular to the plane of the manual lever (3, 4) and at the free end of the tab (16) a holder ring (20) which can be twisted about a ring diameter conceived in extension of or perpendicular to the tab (16).

8. Manual press according to claim 6 or 7, characterised in that the mounting device (15) is arranged between the two manual levers (3, 4).

9. Manual press according to any of claims 1 to 8, characterised in that at least one reinforcement rib (24) is allocated to the press head (2) on the side facing the storage container (5).

10. Manual press according to claim 9, consisting of a fixed manual lever (3) and a manual lever (4) hinged on the press head (2) to activate the piston pump, characterised in that the reinforcement rib (24) is allocated to the fixed manual lever (3).

11. Manual press according to claim 9 or 10, characterised in that the reinforcement rib connects on the outside (23) of a band (22) to hold the storage container (5) and preferably extends to the fixed manual lever (3), and that the outer edge (25) of the reinforcement rib (24) terminates flush with the outer edge (26) of the annular band (22).

## Revendications

1. Pompe à main, notamment pompe à main à levier, pour des masses visqueuses, notamment pour de la graisse, avec une tête de pompe (2) contenant une pompe à piston pour le refoulement de la masse visqueuse d'un orifice d'aspiration vers un orifice de sortie, ainsi que deux leviers à main (3, 4), parmi lesquels l'un au moins est articulé sur la tête de pompe (2) aux fins d'actionner la pompe à piston, dans laquelle une réserve de masse visqueuse, par exemple sous la forme d'un réservoir (5) conformé en tube ou en cartouche, peut être connectée à l'orifice d'aspiration et un adaptateur de sortie (6) souple par endroits au moins, en forme de tuyau ou de flexible, peut être connecté à l'orifice de sortie, caractérisée par le fait qu'il est prévu, sur la tête de pompe (2) ou sur un élément de pompe lié à celle-ci, un dispositif de fixation (9) qui reçoit, notamment dans ou sur lequel est placée l'extrémité libre (8) de l'adaptateur de sortie (6) recourbé en une boucle (10).

2. Pompe à main selon la revendication 1, caractérisée par le fait que l'adaptateur de sortie (6) peut être enclenché sur ou dans le dispositif de fixation (9) de manière sollicitable en traction mais démontable.

3. Pompe à main selon la revendication 1 ou 2, caractérisée par le fait que l'extrémité libre (8) de l'adaptateur de sortie (6) peut être enclenché de manière étanche sur ou dans le dispositif de fixation (9)

4. Pompe à main selon une des revendications 1 à 3, caractérisée par le fait que le dispositif de fixation (9) comporte un embout de graissage (29).

5. Pompe à main selon une des revendications 1 à 4, caractérisée par le fait que le dispositif de fixation (9) est prévu sur la face frontale (11) de la tête de pompe (2).

6. Pompe à main selon une des revendications 1 à 5, comportant au moins un levier à main (3) lié rigidement à la tête de pompe (2) et un réservoir (5) pourvu d'un fût pour la masse visqueuse, caractérisée par un support (16) qui entoure au moins localement le fût du réservoir (5) et est monté sur le levier à main (3) fixe ou sur la tête de pompe (2).

7. Pompe à main selon la revendication 6, caractérisée par le fait que le support (15) comporte une patte (16) qui pivote dans le plan des leviers à main (3, 4) ou perpendiculairement à celui-ci et un collier (20) annulaire qui est monté tournant à l'extrémité libre de la patte (16), autour d'un diamètre imaginaire de l'anneau situé dans le prolongement de la patte (16) ou perpendiculaire à celle-ci.

8. Pompe à main selon la revendication 6 ou 7, caractérisée par le fait que le support (15) est disposé entre les deux leviers à main (3, 4).

9. Pompe à main selon une des revendications 1 à 8, caractérisée par le fait qu'au moins nervure de renfort (24) est associée à la tête de pompe (2), sur la face de celle-ci qui est tournée vers le réservoir (5).

10. Pompe à main selon la revendication 9, comprenant un levier à main (3) fixe et un levier à main (4) articulé sur la tête de pompe (2) pour actionner la pompe à piston, caractérisée par le fait que la nervure de renfort (24) est associée au levier à main (3) fixe.

11. Pompe à main selon la revendication 9 ou 10, caractérisée par le fait que la nervure de renfort (24) se raccorde à la surface extérieure d'un collet (22) recevant le réservoir (5) et de préférence s'étend jusqu'au levier fixe (3) et par le fait que l'arête extérieure (25) de la nervure de renfort (24) se termine dans le même plan que l'arête extérieure (26) du collet annulaire (22).
